(19) Europäisches Patentamt
European Patent Office
Office européen des brevets

(11) **EP 1 455 338 A1**

(12) **EUROPEAN PATENT APPLICATION**

(43) Date of publication:
**08.09.2004 Bulletin 2004/37**

(51) Int Cl.$^7$: **G09G 5/395**

(21) Application number: **04005010.6**

(22) Date of filing: **03.03.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **06.03.2003 JP 2003059867**

(71) Applicant: **Pioneer Corporation**
**Meguro-ku, Tokyo (JP)**

(72) Inventors:
• **Ochiai, Kazunori**
  **Ohta-ku Tokyo (JP)**
• **Matsuno, Atsushi**
  **Nakakoma-gun Yamanashi-ken (JP)**
• **Nagakubo, Tetsuro**
  **Nakakoma-gun Yamanashi-ken (JP)**

(74) Representative: **Goddar, Heinz J., Dr.**
**FORRESTER & BOEHMERT**
**Pettenkoferstrasse 20-22**
**80336 München (DE)**

(54) **Image processor with frame-rate conversion**

(57)     Disclosed is an image processor with frame-rate conversion that can perform frame-rate conversion of a video signal with a single frame memory. In this image processor with frame-rate conversion, input digital video signals are successively written on the frame memory with a timing synchronized with a vertical synchronization signal included in the input digital video signals. During this time, a frequency signal that mainly consists of a train of N pulses for every M cycles of the vertical synchronization signal is generated as a vertical synchronization signal being rate-converted, and the input digital video signals stored in the frame memory are read out in the order in which they were written with a timing synchronized with the vertical synchronization signal being rate-converted. Such a configuration makes it possible to convert the input digital video signals to video signals having a desired vertical synchronization frequency with use of a single frame memory, thereby converting frame-rate.

FIG. 1

**Description**

BACKGROUND OF THE INVENTION

1. Field of the Invention

The present invention relates to image processors with frame-rate conversion that convert input video signals to video signals having a frame-rate (number of frames per second) that is different from the frame-rate of the input video signals.

2. Description of the Related Art

A plasma display device equipped with a frame-rate conversion circuit that converts the frame-rate of the input video signal is now being commercialized. For example, a plasma display device disclosed in Japanese Patent Number 3125269 is provided with a frame-rate conversion circuit that performs frame-rate conversion using two frame memories.

In other words, this frame-rate conversion circuit is configured with first and second frame memories, and a frame memory control means that controls the writing and reading of these first and second frame memories. The frame memory control means performs such a control that, while the input video signals were written on one of the frame memories, video signals are read out from the other frame memory at a readout speed corresponding to a desired vertical synchronization frequency that is different from the vertical synchronization frequency of the input video signals. Accordingly, each time when a vertical synchronization signal is detected in the input video signal, the frame memory control means alternately switches the readout target (or write target) to the appropriate frame memory as noted above. This operation prevents the so-called overrun phenomenon, in which stored data overwrites the video signal of the next frame while being read out from the frame memory, and also makes it possible to convert the input video signals to video signals that has a desired vertical synchronization frequency, thereby converting frame-rate. Since, however, an existing image processor includes two frame memories for such a frame-rate conversion circuit, there is a problem that such image processor is large in a circuit's scale.

A main object of the present invention is to provide an image processor with frame-rate conversion that can perform frame-rate conversion of video signals with a single frame memory.

SUMMARY OF THE INVENTION

One aspect of the present invention relates to an image processor with frame-rate conversion that generates video signals being rate-converted by converting a vertical synchronization frequency of input digital video signals consisting of successive frames into a desired frequency. This image processor comprises a frame memory having a storage capacity for a single frame of said input digital video signals; a memory write control circuit which successively writes said input digital video signals on said frame memory with a timing synchronized with a vertical synchronization signal included in said input digital video signals; a vertical synchronization signal generating circuit which produces a frequency signal mainly consisting of a train of N pulses (N being a natural number) for every M cycles (M being a natural number) of the vertical synchronization signal, as a vertical synchronization signal being rate-converted, the natural number N being larger than the natural number M; and a memory readout control circuit which reads out and outputs the input digital video signals from said frame memory in the order in which said input digital video signals were written and with a timing synchronized with the vertical synchronization signal being rate-converted, as said video signals being rate-converted.

BRIEF DESCRIPTION OF THE DRAWINGS

FIG. 1 shows a configuration of an image processor with frame-rate conversion.
FIG. 2 shows an example of the waveform of the rate-converted vertical synchronization signal VD generated based on the vertical synchronization detection signal V when the first conversion coefficient M is set to "5" and the second conversion coefficient N is set to "6."
FIG. 3 shows an example of the waveform of the rate-converted vertical synchronization signal VD generated based on the vertical synchronization detection signal V when the first conversion coefficient M is set to "5" and the second conversion coefficient N is set to "7."
FIG. 4 is a drawing that schematically shows an example of a storage area in the frame memory.
FIG. 5 shows an example of the operation of the image processor with frame-rate conversion when the first conversion coefficient M is set to "3" and the second conversion coefficient N is set to "2."

DETAILED DESCRIPTION OF THE INVENTION

The following are descriptions of embodiments of the present invention with reference to the accompanying drawings.

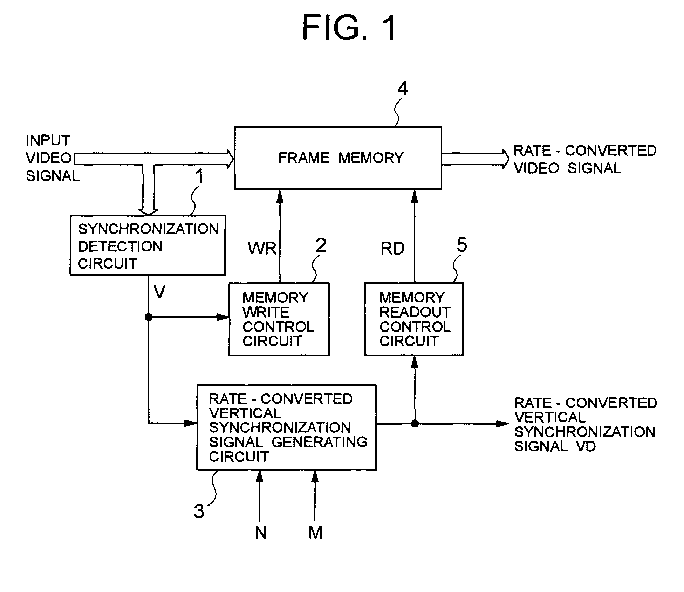

FIG. 1 shows a configuration of one embodiment of an image processor with frame-rate conversion according to the present invention.

As shown in FIG. 1, a synchronization detection circuit 1 generates a vertical synchronization detection signal V each time when a vertical synchronization signal is detected in the input video signal, and supplies the vertical synchronization detection signal V to a memory write control circuit 2 and a rate-converted vertical synchronization signal generating circuit 3. The memory write control circuit 2 generates a write signal WR that indicates the timing of the writing of each pixel synchronized with the vertical synchronization detection signal V, and supplies this write signal WR to a frame memory 4.

Based on a first conversion coefficient M and a second conversion coefficient N (M and N are positive integers), the rate-converted vertical synchronization signal generating circuit 3 converts the vertical synchronization signal (frequency $f_1$) of the input video signal to a rate-converted vertical synchronization signal VD that has a desired vertical synchronization frequency $f_2$, and outputs this rate-converted vertical synchronization signal with a timing synchronized with the above-mentioned vertical synchronization detection signal V. It should be noted that the second conversion coefficient N is set larger than the first conversion coefficient M, but not more than two times larger than the first conversion coefficient M.

That is, the rate-converted vertical synchronization signal generating circuit 3 generates the rate-converted vertical synchronization signal VD with a vertical synchronization frequency $f_2$ given by the following expression:

$$f_2 = f_1 \cdot (N/M),$$

where

$$M < N = 2 \cdot M.$$

The rate-converted vertical synchronization signal generating circuit 3 outputs a rate-converted vertical synchronization signal VD at such timing that for each pulse sequence mainly consisting of a train of N pulses in the rate-converted vertical synchronization signal VD, at least one of the pulses in the pulse sequence has the same timing as one of the pulses in the vertical synchronization detection signal V.

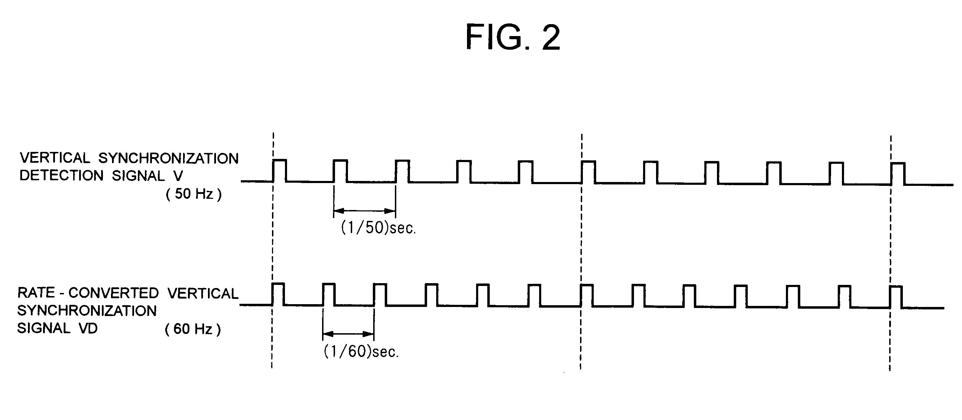

For example, when converting an input video signal with a vertical synchronization signal whose frequency is 50 Hz, such as that of the PAL system television signal, to a video signal with a vertical synchronization frequency of 60 Hz, the first conversion coefficient M is set to "5" and the second conversion coefficient N is set to "6." In this way, the rate-converted vertical synchronization signal generating circuit 3, as shown in FIG. 2, outputs a rate-converted vertical synchronization signal VD, whose frequency is 60 Hz, consisting of six consecutive pulses for every five cycle portions of the vertical synchronization detection signal V, that is, for every period of 5 x (1/50) seconds. One pulse within each of the pulse sequences consisting of six consecutive pulses in the rate-converted vertical synchronization signal VD has the same timing as one pulse in the vertical synchronization detection signal V, as indicated by the dotted lines in FIG. 2. That is, the rate-converted vertical synchronization signal generating circuit 3 outputs the rate-converted vertical synchronization signal VD whose frequency is 60 Hz, synchronized with the vertical synchronization detection signal V whose frequency is 50 Hz.

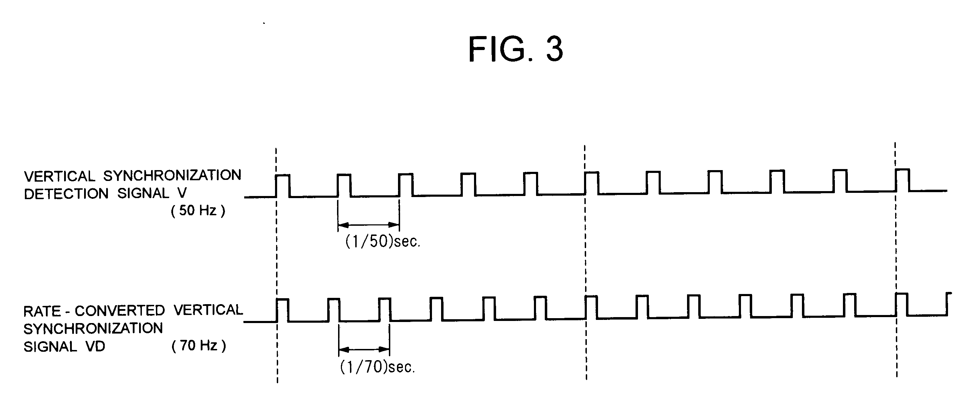

Furthermore, when converting an input video signal whose frequency is 50 Hz to a video signal with a vertical synchronization signal whose frequency is 70 Hz, the first conversion coefficient M is set to "5" and the second conversion coefficient N is set to "7." In this way, as shown in FIG. 3, the rate-converted vertical synchronization signal generating circuit 3 outputs a rate-converted vertical synchronization signal VD whose frequency is 70 Hz, consisting of seven consecutive pulses for every five cycles of the vertical synchronization detection signal V, that is, for every period of 5 x (1/50) seconds. One pulse within each of the pulse sequences consisting of seven consecutive pulses in the rate-converted vertical synchronization signal VD has the same timing as one pulse in the vertical synchronization detection signal V, as indicated by the dotted lines in FIG. 3. That is, the rate-converted vertical synchronization signal generating circuit 3 outputs the 70 Hz rate-converted vertical synchronization signal VD synchronized with the 50 Hz vertical synchronization detection signal V.

Furthermore, when converting an input video signal with a vertical synchronization signal whose frequency is 60 Hz, such as that of the NTSC system television signal, to a video signal with a vertical synchronization signal whose frequency is 72 Hz, the first conversion coefficient M is set to "5" and the second conversion coefficient N is set to "6." In this way, the rate-converted vertical synchronization signal generating circuit 3 outputs a rate-converted vertical synchronization signal VD, whose frequency is 72 Hz, consisting of six consecutive pulses for every five cycles of the vertical synchronization detection signal V, that is, for every period of 5 x (1/60) seconds.

Furthermore, when the first conversion coefficient M and the second conversion coefficient N are both set to "1," the rate-converted vertical synchronization signal generating circuit 3 outputs a rate-converted vertical synchronization signal VD with the same frequency as the vertical synchronization frequency of the input video signal.

In this way, in order to obtain a rate-converted vertical synchronization signal VD that has a vertical synchronization frequency of $f_1 \cdot (N/M)$ as described above, the rate-converted vertical synchronization signal generating circuit 3 generates a frequency signal consisting of N pulses for every M cycles of the vertical synchronization detection signal V and uses this frequency signal for the rate-converted vertical synchronization signal VD.

The rate-converted vertical synchronization signal generating circuit 3 then supplies the rate-converted vertical synchronization signal VD to a display panel portion (not shown in drawing) that drives a display panel such as a plasma display panel, an electroluminescence panel, or a liquid crystal panel for example, as well as a memory readout control circuit 5.

The memory readout control circuit 5 generates a readout signal RD that indicates the timing of the writing of each pixel synchronized with the rate-converted vertical synchronization signal VD, and supplies this to a frame memory 4.

While successively writing input video signals corresponding to the write signal WR, the frame memory 4 reads out the video signals in the order that they are written corresponding to the readout signal RD, and outputs these video signals as a rate-converted video signal.

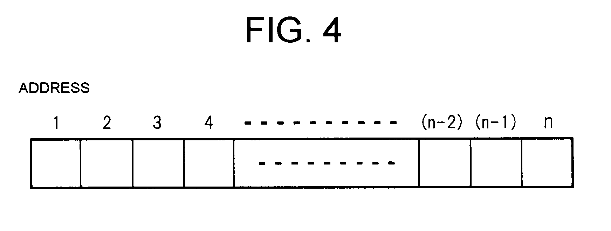

FIG. 4 is a drawing that schematically shows an example of a storage area in the frame memory 4.

In the example shown in FIG. 4, the frame memory 4 is provided with a storage area assigned to addresses "1" to "n" corresponding to all the pixels, that is, a first pixel to an n-th pixel, of a display panel. The frame memory 4 successively overwrites the input video signal of one frame portion of the picture to the addresses "1" to "n" in response to the write signal WR. Accordingly, the stored data is overwritten in order of the addresses "1" to "n" each time the next frame portion of the picture is supplied. And during this time, the frame memory 4 reads out the stored data in order of the addresses "1" to "n" in response to the readout signal RD. In other words, the frame memory 4 successively reads out a video signal corresponding to the first pixel to the n-th pixel of a display panel in the order that it is written.

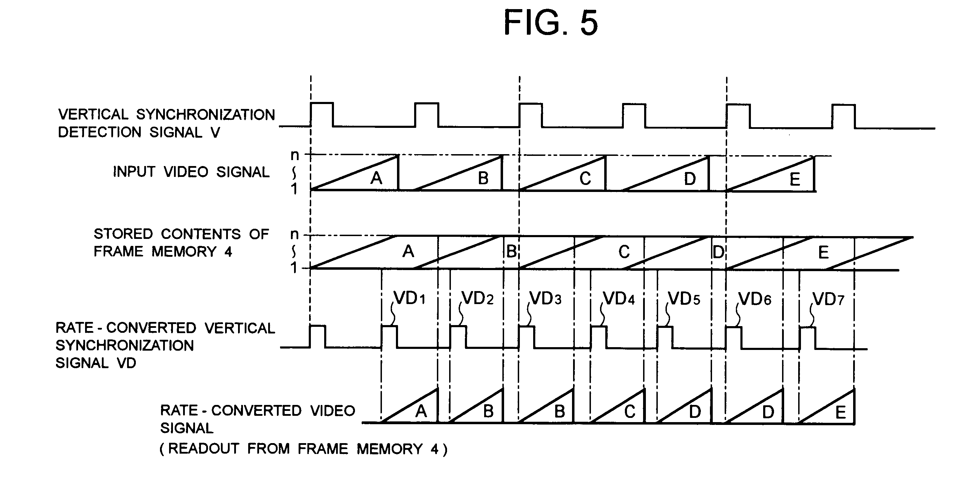

FIG. 5 shows an example of the operation of the image processor with frame-rate conversion shown in FIG. 1.

It should be noted that FIG. 5 shows a case in which the rate-converted vertical synchronization signal generating circuit 3 operates with the first conversion coefficient M set to "2" and the second conversion coefficient N set to "3."

As shown in FIG. 5, with these settings, for every two cycles of the vertical synchronization detection signal V, the rate-converted vertical synchronization signal generating circuit 3 outputs within that period a rate-converted vertical synchronization signal VD consisting of three consecutive pulses. That is, the rate-converted vertical synchronization signal generating circuit 3 outputs a rate-converted vertical synchronization signal VD that is synchronized with the vertical synchronization signal of the input video signal as shown by the dotted lines in FIG. 5, and that has a frequency of (3/2) times that vertical synchronization frequency. When input video signals corresponding to a picture frame A, a picture frame B, a picture frame C, ..., and a picture frame E are supplied here as shown in FIG. 5, the frame memory 4 successively overwrites and stores the input video signals corresponding to each frame with a timing corresponding to the vertical synchronization detection signal V to the addresses "1" to "n."

For example, when the input video signals corresponding to the picture fame A are all stored in the addresses "1" to "n," the input video signals corresponding to the next picture frame, the picture fame B, are supplied, and therefore the stored data corresponding to the picture frame A are gradually overwritten by the data that corresponds to the picture frame B. During this time, the frame memory 4 successively reads out the data stored in the addresses "1" to "n" with a timing that corresponds to the rate-converted vertical synchronization signal $VD_1$ shown in FIG. 5. Although the writing for the picture frame B is being executed at the same time, since the rate-converted vertical synchronization signal VD has a higher frequency than the vertical synchronization detection signal V, the readout speed for the picture frame A is faster than the writing speed for the picture frame B. Accordingly, before the data stored in the frame memory 4 is all overwritten with the video signals corresponding to the picture frame B, the video signals corresponding to the picture frame A are all read out.

Then, when the reading out of the picture frame A, which was stored in the addresses "1" to "n," is finished, the frame memory 4 again starts the same readout process from the address "1" with a timing corresponding to the rate-converted vertical synchronization signal $VD_2$ shown in FIG. 5. Then, in the period until the next rate-converted vertical synchronization signal $VD_3$ is supplied, the video signals of the picture frame B are overwritten and stored in the addresses "1" to "n" of the frame memory 4. Therefore, the reading out from the frame memory 4 of the video signals corresponding to the picture frame B stored in the addresses "1" to "n" is carried out between the rate-converted vertical synchronization signals $VD_2$ and $VD_3$.

Then, when the reading out of the picture frame B, which was stored in the addresses "1" to "n," is finished, the frame memory 4 starts writing the video signals corresponding to the next picture frame, the picture frame C, with a timing corresponding to the vertical synchronization detection signal V, and also starts reading out in the following manner. Namely, the frame memory 4 reads out the stored data in the addresses from "1" through "n" with a timing corresponding to the rate-converted vertical synchronization signal $VD_3$ shown in FIG. 5. Since the rate-converted vertical synchronization signal VD has a higher frequency than the vertical synchronization detection signal V, the speed at which the stored picture frame B is read out is faster than the speed at which the data for the picture frame C is overwritten. Accordingly, the video signals corresponding to the picture frame B continue to be read out successively from the frame memory 4.

Then, when the re-reading out of all the video signals corresponding to the picture frame B is finished, the frame memory 4 successively reads out the data stored in the addresses "1" to "n" with a timing corresponding to the rate-converted vertical synchronization signal $VD_4$ shown in FIG. 5. In the period until the next rate-converted vertical synchronization signal $VD_5$ is supplied, all the video signals of the picture frame C are overwritten and stored in the addresses "1" to "n" of the frame memory 4. Therefore, the frame memory 4 carries out the reading out of the video signals corresponding to the picture frame C between the rate-converted vertical synchronization signals $VD_4$ and $VD_5$.

Then, when the reading out of the picture frame C, which was stored in the addresses "1" to "n," is finished, the frame memory 4 again starts the same readout process from the address "1" with a timing corresponding to the rate-converted vertical synchronization signal $VD_5$. In the period until the next rate-converted vertical synchronization signal $VD_6$ is supplied, the video signals of the picture frame D are overwritten and stored in the addresses "1" to "n" of the frame memory 4. Therefore, the reading out from the frame memory 4 of the video signals corresponding to the picture frame D stored in the addresses "1" to "n" is carried out between the rate-converted vertical synchronization signals $VD_5$ and $VD_6$.

Then, when the reading out of the picture frame D, which was stored in the addresses "1" to "n," is finished, the frame memory 4 starts writing the video signals corresponding to the next picture frame E with a timing corresponding to the vertical synchronization detection signal V, and also starts reading out in the following manner. Namely, the frame memory 4 reads out the stored data in the addresses from "1" through "n" with a timing corresponding to the rate-converted vertical synchronization signal $VD_6$ shown in FIG. 5. Since the rate-converted vertical synchronization signal VD has a higher frequency than the vertical synchronization detection signal V, the speed at which the stored picture frame D is read out is faster than the speed at which the data for the picture frame E is overwritten. Accordingly, the video signals corresponding to the picture frame D continue to be read out successively from the frame memory 4.

With the above-described operation, the vertical synchronization frequency of the video signal is converted to (3/2) times without causing the so-called overrun phenomenon, in which stored data overwrites the video signal of the next frame while being read out from the frame memory. That is, with the frame-rate conversion circuit shown in FIG. 1, it is possible to convert the input video signal to a video signal that has a desired vertical synchronization frequency without (with frame-rate conversion) causing the overrun phenomenon and using a single frame memory.

It is understood that the foregoing description and accompanying drawings set forth the preferred embodiments of the invention at the present time. Various modifications, additions and alternatives will, of course, become apparent to those skilled in the art in light of the foregoing teachings without departing from the spirit and scope of the disclosed invention. Thus, it should be appreciated that the invention is not limited to the disclosed embodiments but may be practiced within the full scope of the appended claims.

The features disclosed in the foregoing description, in the claims and/or in the accompanying drawings may, both separately and in any combination thereof, be material for realising the invention in diverse forms thereof.

## Claims

1. An image processor with frame-rate conversion that generates video signals being rate-converted by converting a vertical synchronization frequency of input digital video signals consisting of successive frames into a desired frequency, said image processor comprising:

   a frame memory having a storage capacity for a single frame of said input digital video signals;
   a memory write control circuit which successively writes said input digital video signals on said frame memory with a timing synchronized with a vertical synchronization signal included in said input digital video signals;
   a vertical synchronization signal generating circuit which produces a frequency signal mainly consisting of a train of N pulses (N being a natural number) for every M cycles (M being a natural number) of the vertical synchronization signal, as a vertical synchronization signal being rate-converted, the natural number N being larger than the natural number M; and
   a memory readout control circuit which reads out and outputs the input digital video signals from said frame memory in the order in which said input digital video signals were written and with a timing synchronized with the vertical synchronization signal being rate-converted, as said video signals being rate-converted.

2. An image processor with frame-rate conversion according to claim 1, wherein the natural number N is smaller than two times the natural number M.

# FIG. 1

# FIG. 2

VERTICAL SYNCHRONIZATION
DETECTION SIGNAL V
( 50 Hz )

(1/50)sec.

RATE - CONVERTED VERTICAL
SYNCHRONIZATION
SIGNAL VD     ( 60 Hz )

(1/60)sec.

EP 1 455 338 A1

# FIG. 3

VERTICAL SYNCHRONIZATION
DETECTION SIGNAL V
( 50 Hz )

(1/50)sec.

RATE - CONVERTED VERTICAL
SYNCHRONIZATION
SIGNAL VD ( 70 Hz )

(1/70)sec.

EP 1 455 338 A1

# FIG. 4

ADDRESS

| 1 | 2 | 3 | 4 | - - - - - - - - - - - | (n-2) | (n-1) | n |
|---|---|---|---|---|---|---|---|
|   |   |   |   |  - - - - - - - - -  |   |   |   |

# FIG. 5

EP 1 455 338 A1

**European Patent Office**

# EUROPEAN SEARCH REPORT

Application Number

EP 04 00 5010

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 02/39737 A (ASADA RYOJI ; AWAMOTO SHIGERU (JP); KATO SHIRO (JP); MOTODA KAZUMASA () 16 May 2002 (2002-05-16)<br>* abstract; figures 1,6,7A,7B,8A,8B *<br>& US 2004/081437 A1 (ASADA RYOJI ET AL) 29 April 2004 (2004-04-29)<br>* paragraphs [0074] - [0081] *<br>----- | 1,2 | G09G5/395 |
| A | US 6 054 980 A (EGLIT ALEXANDER JULIAN) 25 April 2000 (2000-04-25)<br>* abstract; compound 3 *<br>* column 2, line 54 - column 4, line 12 *<br>----- | 1,2 | |
| | | | TECHNICAL FIELDS SEARCHED (Int.Cl.7)<br><br>G09G<br>H04N |

The present search report has been drawn up for all claims

| Place of search | Date of completion of the search | Examiner |
|---|---|---|
| Munich | 1 July 2004 | Fulcheri, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                           
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 00 5010

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2004

| Patent document cited in search report | | Publication date | Patent family member(s) | | Publication date |
|---|---|---|---|---|---|
| WO 0239737 | A | 16-05-2002 | JP 2002152569 A<br>JP 2002320203 A<br>WO 0239737 A1<br>US 2004081437 A1 | | 24-05-2002<br>31-10-2002<br>16-05-2002<br>29-04-2004 |
| US 2004081437 | A1 | 29-04-2004 | JP 2002152569 A<br>JP 2002320203 A<br>WO 0239737 A1 | | 24-05-2002<br>31-10-2002<br>16-05-2002 |
| US 6054980 | A | 25-04-2000 | NONE | | |

EPO FORM P0459

For more details about this annex : see Official Journal of the European Patent Office, No. 12/82